# EUROPÄISCHE PATENTSCHRIFT

(11) **EP 2 435 821 B1**
(45) Veröffentlichungstag und Bekanntmachung des Hinweises auf die Patenterteilung: **03.08.2016**
(21) Anmeldenummer: 10714040.2
(22) Anmeldetag: 23.04.2010
(51) Int. Cl.: F01N 11/00, G01N 27/22, F01N 3/20

(54) **SPEICHERBEHÄLTER ZUR BESTIMMUNG DER GESPEICHERTEN MENGE VON AMMONIAK FÜR DIE KATALYTISCHE ABGASREINIGUNG**
STORAGE CONTAINER FOR DETERMINING A STORED AMOUNT OF AMMONIA FOR CATALYTIC EXHAUST GAS PURIFICATION
RÉSERVOIR DE RÉTENTION PERMETTANT DE DÉTERMINER LA QUANTITÉ D'AMMONIAC RETENUE EN VUE DE L'ÉPURATION CATALYTIQUE DES GAZ D'ÉCHAPPEMENT

(30) Priorität: 27.05.2009 DE 102009022884
(43) Veröffentlichungstag der Anmeldung: 04.04.2012
(73) Patentinhaber: Bayerische Motoren Werke Aktiengesellschaft, 80809 München (DE)
(72) Erfinder: WIDMANN, Ralf, 85778 Haimhausen (DE); BAUMEISTER, Thomas, 80638 Muenchen (DE); BRUHN, Andreas, 82178 Puchheim (DE); STRATHOFF, Udo, 81249 München (DE)
(86) Internationale Anmeldenummer: PCT/EP2010/055450
(87) Internationale Veröffentlichungsnummer: WO 2010/136277

(56) Entgegenhaltungen:
- DE-A1- 19 931 007
- DE-A1-102007 060 221
- DE-A1-102008 001 004

## Beschreibung

Die Erfindung betrifft einen Speicherbehälter für Ammoniak, nach dem Oberbegriff des Anspruchs 1. Zum Stand der Technik wird beispielshalber auf die DE 197 28 343 C1 und auf die DE 199 31 007 A1 verwiesen.

Im Rahmen der sog. SCR-Technologie zur katalytischen Reinigung von Brennkraftmaschinen-Abgasen insbesondere in Kraftfahrzeugen wird bekanntlich Ammoniak verwendet. Dieses kann auf unterschiedliche Weise im Fahrzeug mitgeführt werden, bspw. als Harnstoff-Lösung. Angestrebt ist jedoch die Verwendung von sog. Feststoffspeichern, in denen Ammoniak in einem geeigneten Speichermedium wie bspw. Strontiumchlorid chemisch gebunden ist. Freigesetzt wird das Ammoniak dabei durch Wärmezufuhr zum Speichermedium, vgl. hierzu die oben erstgenannte Schrift.

Nachdem die in einem solchen Feststoffspeicher gespeicherte Menge von Ammoniak durch Entnahme geringer wird, ist angestrebt, die im Feststoffspeicher noch befindliche Restmenge von Ammoniak einfach bestimmen zu können. Dies ist bspw. durch Wiegen des aus dem Kraftfahrzeug ausgebauten Feststoffspeichers möglich.

Aus der eingangs zweitgenannten Schrift ist es bekannt, dass an einem ammoniakspeichernden SCR-Katalysator der Speicherzustand dieses Katalysators bestimmt werden kann, indem auf den Katalysator zwei Elektroden aufgebracht sind, die einen verlustbehafteten Kondensator bilden, dessen komplexe Impedanz ein Maß für den Beladungszustand des Katalysators darstellt. Dabei kann neben dem Betrag der Impedanz auch die Kapazität gemessen werden.

Vorliegend soll aufgezeigt werden, wie die in einem Speicherbehälter durch chemische Bindung mit einem Feststoff-Speichermedium, insbesondere einem Salz eines Erdalkalimetalls oder dgl., gespeicherten Menge von Ammoniak, welches durch Wärmezufuhr freisetzbar ist, um einer katalytischen Abgasreinigungsvorrichtung einer Brennkraftmaschine eines Kraftfahrzeugs zugeführt zu werden, einfach und insbesondere auch während der Fahrt des Fahrzeugs bestimmt werden kann. (= Aufgabe der vorliegenden Erfindung).

Zur Lösung dieser Aufgabe wird ein Speicherbehälter mit den Merkmalen des Anspruchs 1 vorgeschlagen.

Es wurde erkannt, dass das Speichermedium dann, wenn es sich direkt zwischen zwei geeignet geformten Elektroden befindet, bezüglich dieser Elektroden als ein Dielektrikum wirken kann, wenn an die beiden Elektroden eine elektrische Spannung bzw. Spannungs-Differenz angelegt wird, so dass dann ein elektrischer Kondensator vorliegt. Weiterhin wurde erkannt, dass sich bei im wesentlichen konstanter elektrischer Spannung und konstanten geometrischen Abmessungen die (elektrische) Kapazität dieses Kondensators in Abhängigkeit vom Beladungsgrad des Speichermediums, d.h. in Anhängigkeit davon, welche Menge von Ammoniak im Speichermedium gespeichert ist, ändert. Somit kann ein einfacher Zusammenhang zwischen der grundsätzlich messbaren Kapazität des so gebildeten Kondensators und dem Beladungsgrad des Speichermediums vorzugsweise durch experimentelle Ermittlung hergestellt werden, beispielsweise indem das Speichermedium mit unterschiedlichen Beladungsgraden gewogen und dabei jeweils die zugehörige Kapazität festgestellt wird. Ist dann später ein Speicherbehälter mit dieser Menge von Speichermedium und den gleichen Elektroden im Kraftfahrzeug verbaut, so kann bei Bedarf die Kapazität des so gebildeten Kondensators ermittelt und über die zuvor ermittelten bekannten Zusammenhänge hieraus auf den Beladungsgrad des Speichermediums geschlossen werden.

Das Gehäuse des das Speichermedium aufnehmenden Speicherbehälters selbst bildet eine der beiden Elektroden während die bzw. allgemein eine andere Elektrode bspw. zentral innerhalb des Speichermediums vorgesehen ist. Auch bei einer solchen Ausgestaltung kann der Speicherbehälter in einer bevorzugten Ausführungsform eine im wesentlichen zylindrische Gestalt besitzen, in dessen Zylinderachse die zweite Elektrode angeordnet ist bzw. dessen Zylinderachse eine der beiden Elektroden und dessen Mantelfläche die andere der beiden Elektroden ist.

Es können jedoch auch mehr als zwei Elektroden vorgesehen sein, wodurch mehrere Kondensatoren gebildet sind, zwischen denen sich jeweils eine Teilmenge des Speichermediums befindet. Damit ist es möglich, die Beladung dieser bzw. jeder Teilmenge individuell zu bestimmen. Beispielsweise können in einem zylindrischen Speicherbehälter, dessen das Speichermedium umhüllende Wand als erste Elektrode eines ersten Kondensators fungiert, mehrere zylindrische Elektroden koaxial zueinander im Inneren des Speicherbehälters und somit quasi im Speichermedium vorgesehen sein, womit sich quasi eine Reihenschaltung mehrerer Kondensatoren ergibt und wobei vorgesehen sein kann, dass die Kapazität jedes einzelnen Kondensators individuell bestimmt werden kann, woraus eine ggf. unterschiedliche Beladung des Speichermediums in verschiedenen Bereichen des Speicherbehälter-Innenraums festgestellt werden kann.

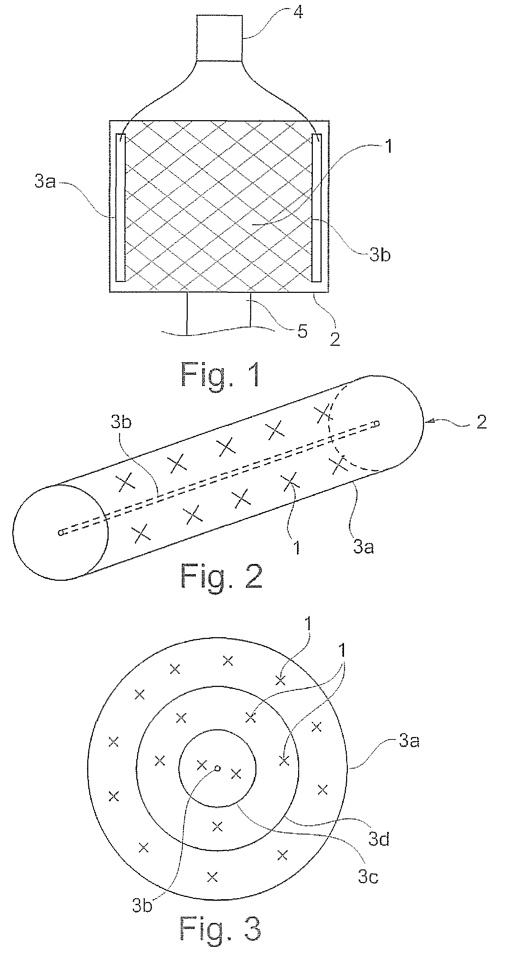

Die beigefügten Prinzipskizzen zeigen mögliche Ausführungsbeispiele der vorliegenden Erfindung, wobei jeweils das Gehäuse eines Speicherbehälters, in dem sich ein Feststoff-Speichermedium 1 befindet, mit der Bezugsziffer 2 gekennzeichnet ist. Bei jedem der drei Ausführungsbeispiele nach den Figuren 1 - 3 sind ferner zumindest zwei Elektroden 3a, 3b vorgesehen, die einen elektrischen Kondensator bilden, dessen Dielektrikum durch zumindest eine Teilmenge des Feststoff-Speichermediums gebildet ist. Über elektrische Leitungen sind die Elektroden 3a, 3b sowie die gegebenenfalls weitere(n) Elektrode(n) geeignet mit einer elektronischen Steuer- und Auswerteeinheit 4 verbunden, durch welche zum einen an einander benachbarte Elektroden 3a, 3b,..... eine elektrische Spannung bzw. Spannungs-Differenz angelegt wird und in welcher die elektrische Kapazität des durch diese Elektroden 3a, 3b, ..... gebildeten elektrischen Kondensators ermittelt wird. Wie oben beschrieben kann dann aus dem aktuellen Wert für die elektrische Kapazität auf die Menge von im sich zwischen den besagten Elektroden 3a, 3b, usw. befindenden Feststoff-Speichermedium 1 enthaltenen Ammoniak geschlossen werden, beispielsweise ebenfalls in der elektronischen Steuer- und Auswerteeinheit 4, in welcher entsprechende Referenzwerte abgelegt sind.

Beim nicht erfinderischen Ausführungsbeispiel nach Figur 1 ist der Speicherbehälter durch ein quaderförmiges Gehäuse 2 gebildet, welches figürlich im Schnitt dargestellt ist, und es sind die beiden Elektroden 3a, 3b, zwischen denen sich das im Gehäuse 2 enthaltene Speichermedium 1 befindet, geeignet gegenüber dem Gehäuse 2 isoliert an zwei einander gegenüber liegenden Wänden des Gehäuses 2 befestigt, wobei vorliegend die Fläche jeder Elektrode 3a, 3b im wesentlichen gleich der Fläche der zugehörigen Gehäusewand ist. Letzteres ist jedoch kein zwingendes Merkmal. Zwischen diesen beiden Elektroden 3a, 3b befindet sich das Feststoff-Speichermedium 1, in welchem Ammoniak chemisch gebunden ist bzw. gebunden sein kann. Über eine lediglich abstrakt dargestellte Entnahmeleitung 5, die an einer Seite des Gehäuses 2 die Gehäusewand durchdringend mit dem Innenraum des Gehäuses 2 und somit quasi mit dem Speichermedium 1 verbunden ist, ist auf grundsätzlich bekannte Weise eine gezielte Entnahme von Ammoniak aus dem Speichermedium 1 möglich. Mit Hilfe des durch die beiden Elektroden 3a, 3b gebildeten elektrischen Kondensators ist auf die oben beschriebene Weise die im Speichermedium 1 enthaltene Menge von Ammoniak ermittelbar.

Beim räumlich dargestellten Ausführungsbeispiel nach Figur 2 besitzt das Gehäuse 2 des Speicherbehälters die Gestalt eines Hohlzylinders mit (selbstverständlich) geschlossenen Stirnseiten. Im wesentlichen im Bereich der Zylinderachse dieses Hohlzylinders ist sich im wesentlichen über dessen gesamter Länge erstreckend eine Elektrode 3b vorgesehen, während die andere Elektrode 3a eines durch diese beiden Elektroden 3a, 3b gebildeten Kondensators durch das metallische Gehäuse 2 des Speicherbehälters gebildet ist, der abermals vollständig (mit Ausnahme des von der inneren Elektrode 3b beanspruchten Raums) mit einem Feststoff-Speichermedium 1 befüllt ist. Der Einfachheit halber ist hier die Entnahmeleitung 5 nicht dargestellt, jedoch selbstverständlich vorgesehen. Selbstverständlich kann bzw. sollte das gleichzeitig die (erste) Elektrode 3a bildende Gehäuse 2 von einer elektrisch isolierenden Schutzschicht oder einer weiteren einen elektrischen Isolator darstellenden Wand umgeben sein.

Das Ausführungsbeispiel nach Figur 3 ist in einem Schnitt dargestellt, wobei das Gehäuse 2 analog dem Ausführungsbeispiel nach Fig.2 die Gestalt eines Hohlzylinders aufweisen kann. Hier sind konzentrisch zu dessen Zylinderachse, in welcher (analog Fig.2) die zweite Elektrode 3b liegt, mehrere abermals die Gestalt von Hohlzylindern mit verschiedenem Zylinder-Radius aufweisende Elektroden 3c, 3d im Feststoff-Speichermedium 1 vorgesehen, welches (analog Fig.2) vom die sog. Elektrode 3a bildenden Gehäuse umhüllt ist. Hier liegt somit eine Reihenschaltung von drei elektrischen Kondensatoren vor, die durch die Elektroden 3b und 3c, daran anschließend durch die Elektroden 3c und 3d, sowie daran anschließend durch die Elektroden 3d und 3a gebildet wird.

Mit dem beschriebenen Verfahren bzw. mit einem entsprechenden Speicherbehälter kann auf einfache Weise in einem Kraftfahrzeug der Beladungsgrad eines Feststoffspeichers mit Ammoniak bzw. der "Füllstand" von Ammoniak in einem im Fahrzeug vorgesehenen Feststoffspeicher automatisch bestimmt und über eine elektronische Auswerteeinheit, in der der o.g. Zusammenhang zwischen der Kapazität des Kondensators und dem Beladungsgrad des Speichermediums abgelegt ist, dem Fahrer des Fahrzeugs angezeigt werden. Vorteilhafterweise arbeitet dieses Verfahren absolut verschleißfrei und führt zu keiner nennenswerten Erhöhung des Gewichts, ist kostengünstig umsetzbar und liefert selbstverständlich ausreichend genau reproduzierbare Ergebnisse, wobei noch darauf hingewiesen sei, dass durchaus eine Vielzahl von Details abweichend von obigen Erläuterungen gestaltet sein kann, ohne den Inhalt der Patentansprüche zu verlassen.

## Patentansprüche

1. Speicherbehälter für Ammoniak, in welchem dieses durch chemische Bindung mit einem Feststoff-Speichermedium (1), insbesondere einem Salz eines Erdalkalimetalls oder dgl., speicherbar ist und durch Wärmezufuhr freisetzbar ist, um einer katalytischen Abgasreinigungsvorrichtung einer Brennkraftmaschine zugeführt zu werden,
**dadurch gekennzeichnet, dass** zumindest eine Wand des Gehäuses (2) des Speicherbehälters als erste Elektrode (3a) eines elektrischen Kondensators fungiert und dass innerhalb des Speicherbehälters zumindest eine weitere Elektrode (3b) dieses Kondensators vorgesehen und derart angeordnet ist, dass zumindest eine Teilmenge des Speichermediums (1) das Dielektrikum dieses Kondensators bildet, dessen Kapazität einen Rückschluss auf die gespeicherte Menge von Ammoniak ermöglicht.

2. Speicherbehälter nach Anspruch 1,
**dadurch gekennzeichnet, dass** der Speicherbehälter eine im wesentlichen zylindrische Gestalt besitzt und die zweite Elektrode (3b) in der Zylinderachse des Speicherbehälters vorgesehen ist.

3. Speicherbehälter nach Anspruch 1 oder 2,
**dadurch gekennzeichnet, dass** mehrere Elektroden vorgesehen sind, die mehrere verschiedene Teilmengen des Speichermediums (1) als Dielektrikum aufweisende elektrische Kondensatoren vorgesehen sind.

## Claims

1. A storage container for ammonia, in which ammonia can be stored by chemically binding with a solids storage medium (1), more especially a salt of an alkaline-earth metal or the like, and can be released by the supply of heat in order to be supplied to a catalytic exhaust gas purification device of an internal combustion engine, **characterised in that** at least one wall of the housing (2) of the storage container functions as the first electrode (3a) of an electric capacitor and **in that** at least a further electrode (3b) of this capacitor is provided and arranged inside the storage container such that at least a partial quantity of the storage medium (1) forms the dielectric of this capacitor, the capacity of which allows a conclusion to be drawn about the stored quantity of ammonia.

2. A storage container according to claim 1, **characterised in that** the storage container has a substantially cylindrical shape and the second electrode (3b) is provided in the cylinder axis of the storage container.

3. A storage container according to claim 1 or claim 2, **characterised in that** a plurality of electrodes are provided which are provided with a plurality of electric capacitors having different partial quantities of the storage medium (1) as dielectric.

## Revendications

1. Réservoir de stockage d'ammoniac dans lequel l'ammoniac peut être stocké par liaison chimique avec un agent accumulateur solide (1), en particulier un sel de métal alcalino-terreux ou similaire, et peut être libéré par apport de chaleur pour pouvoir être transféré dans un dispositif d'épuration catalytique des gaz d'échappement d'un moteur à combustion interne,
**caractérisé en ce qu'**
au moins une paroi du boîtier (2) du réservoir accumulateur constitue une première électrode (3a) d'un condensateur électrique, et, à la partie interne du réservoir accumulateur au moins une autre électrode (3b) de ce condensateur est prévue et montée de sorte qu'au moins une quantité partielle de l'agent accumulateur (1) constitue le diélectrique de ce condensateur dont la capacité permet un dégagement de la quantité d'ammoniac emmagasinée.

2. Réservoir de stockage conforme à la revendication 1,
**caractérisé en ce qu'**
il a une forme essentiellement cylindrique et la seconde électrode (3b) est située dans l'axe du cylindre constitutif du réservoir de stockage.

3. Réservoir de stockage conforme à la revendication 1 ou 2, **caractérisé en ce qu'**
il est prévu plusieurs électrodes qui constituent plusieurs condensateurs électriques renfermant des quantités partielles de l'agent accumulateur (1) en tant que diélectriques.
